# EUROPEAN PATENT APPLICATION

(11) **EP 3 757 056 A1**
(43) Date of publication of application: **30.12.2020**
(21) Application number: 20182093.3
(22) Date of filing: 24.06.2020
(51) Int. Cl.: B66F 7/06, B66F 9/06, B60P 1/43

(54) **AUTOMATIC GUIDED VEHICLES WITH INTEGRATED LIFTING APPARATUS**

(30) Priority: 24.06.2019 GB 201909039
(71) Applicant: Arrival Limited, London W14 8TS (GB)
(72) Inventor: FAIRCLOUGH, Jamie, London, W14 8TS (GB)
(74) Representative: Korenberg, Alexander Tal

(57) **Abstract**

A mobile lifting apparatus has a platform (133) coupled to a plurality of scissor lifting arms (201, 202) which are coupled to automatic guided vehicles (AGVs, 141). The lifting apparatus has a control system which controls the height and angle of the platform. The scissor lifting arms can be controlled to alter the height and/or angle of the platform. A lift apparatus can have a sensor (277) which determines the angle and height of the platform and can maintain the platform at a specific angle and height while moving over uneven terrain. The controllers on multiple AGVs can communicate with each other so that the platform positions for multiple AGVs can be coordinated when multiple AGVs are carrying large objects.

## Description

### FIELD OF INVENTION

The field of invention is the physical operation of the technological process, product design and assembling optimization in robotized manufacturing.

### BACKGROUND

Scissor lift equipment has been used to raise and lower platforms. The scissor lifts can have lift arms arranged in a crossed configuration with a hinge coupled to the center portions of the lift arms. The upper ends of the lift arms can be coupled to a platform. Actuators coupled to the lift arms are used to move the lift arms between a more horizontal orientation and a more vertical orientation. The platform is lowered when the lift arms are in the horizontal orientation and the platform is raised when the lift arms are in the vertical orientation.

A common disadvantage of the existing scissor lift equipment is that they simply raise a platform in parallel with the ground. However, these systems do not monitor or adjust for misalignments and the platform may not be perpendicular to gravitational forces. Thus, objects placed on the platform may not be properly supported and may roll off of the platform if the platform is not perfectly level. Further, scissor lift equipment is not designed to be used in a coordinated manner where multiple scissor lifts are used in combination to lift and transport objects. What is needed is an improved lift apparatus which can control the platform angle and work in a coordinated manner.

### SUMMARY

A mobile lifting apparatus has a platform coupled to two scissor lifts which raise and lower the platform mounted on automated guided vehicles (AGVs). The AGVs raise and lower the platforms and move objects placed on the platforms to any destination. The scissor lifts have two arms having center sections which are coupled to opposite sides of a rotational actuator. Upper ends of the lift arms can be coupled to a lower surface of the platform and the lower ends of the lift arms can be coupled to the AGVs. The upper end of the first lift arm can be coupled to a hinge fixed to a lower surface of the platform and the lower end of the first lift arm can be coupled to a slide on an upper surface of the AGV. In parallel, the upper end of the second lift arm can be coupled to a slide mechanism on the opposite lower surface of the platform and the lower end of the second lift arm can be coupled to a hinge fixed to the opposite upper surface of the AGV. The arm ends attached to the slides move inward towards the center line when the platform is raised and outward when the platform is lowered.

### BRIEF DESCRIPTION OF THE DRAWINGS

FIG. 1 illustrates a perspective exploded view of an embodiment of a scissor lift.
FIG. 2 illustrates a front view of a scissor lift in a lowered position.
FIG. 3 illustrates a front view of a scissor lift in a raised position.
FIG. 4 illustrates a top view of a scissor lift in a lowered position.
FIG. 5 illustrates a front cross section view of a scissor lift in a lowered position.
FIG. 6 illustrates a top view of a scissor lift in a raised position.
FIG. 7 illustrates a front cross section view of a scissor lift in a raised position.
FIG. 8 illustrates a side view of two scissor lifts supporting a platform at an angle.
FIG. 9 illustrates a side view of four scissor lifts supporting a platform at an angle.
FIGS. 10 - 12 illustrate top views of AGVs having multiple scissor lifts.
FIG. 13 illustrates a top view of AGVs having sensors and controllers.
FIG. 14 illustrates a side view of an AGV with integrated scissor lifts supporting an object.
FIG. 15 illustrates a side view of three AGVs supporting an elongated object with integrated scissor lifts supporting the object.

### Detailed Description

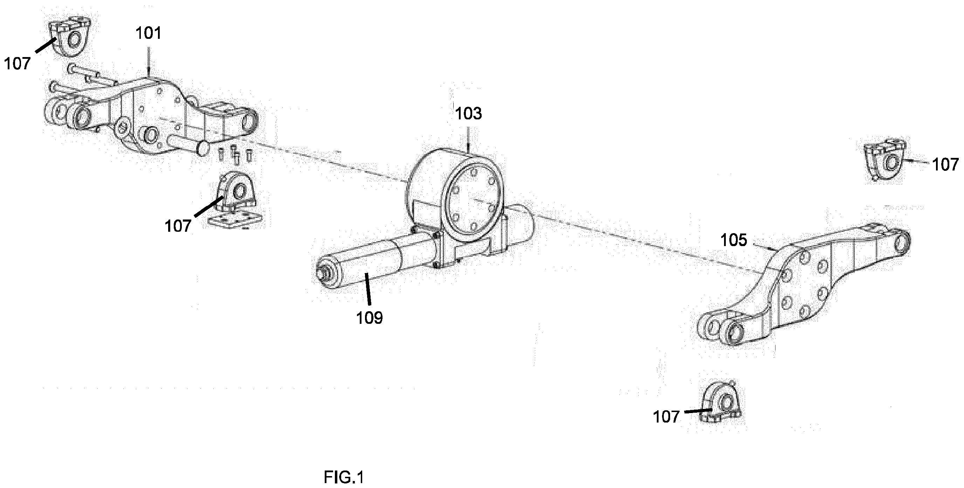

FIG. 1 illustrates a perspective exploded view of an embodiment of a scissor lift mechanism having lifting arms 101, 105 which raise and lower a platform. In this example, the lifting arms 101, 105 are arranged in a crossed pattern with an upper end of lifting arms 101, 105 coupled using hinges 107 to an under side of a lift platform. The lower end of lifting arms 101,105 are coupled using hinges 107 to the top side of an AGV. The center portions of the lifting arms 101, 105 are coupled to a rotational actuator 103 which can be powered by a motor 109. The rotational actuator 103 moves to change the angle between the lifting arms 101, 105. In a lowered position, the lifting arms 101, 105 can be in a flatter horizontal orientation and in a raised position the rotational actuator 103 moves the lifting arms 101, 105 to a more vertical upright orientation.

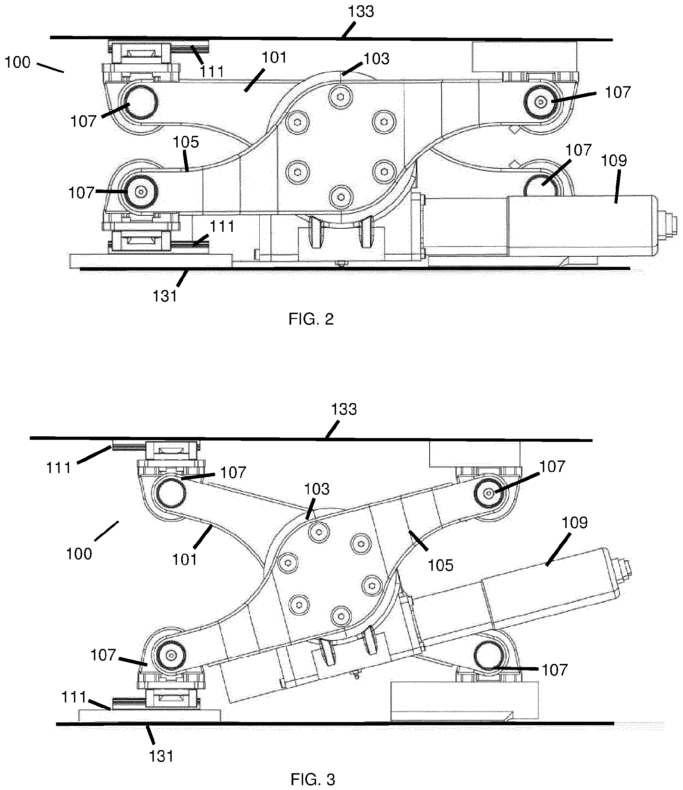

FIG. 2 illustrates a scissor lift mechanism in a lowered position. The scissor lift mechanism is mounted between an AGV 131 and a platform 133. The right ends of lifting arms 101, 105 are coupled to hinges 107 which can be rigidly attached to the AGV 131 and lift platform 133. The left ends of the lifting arms 101, 105 are coupled to hinges 107 which slide horizontally on slide tracks 111 on the AGV 131 and platform 133. In the lowered position the hinges 107 are on the left portion of the slide tracks 111. The motor 109 of the rotational actuator 103 is coupled to a controller which rotates the lifting arms 101, 105.

FIG. 3 illustrates a front view of the scissor lift mechanism in a raised position. The rotational actuator 103 has moved the lifting arms 101, 105 to a raised angle upright orientation which results in lifting of the platform 133. As the lifting arms 101, 105 rotate, the left ends of the lifting arms 101, 105 coupled to hinges 107 will slide to the right on the slide tracks 111.

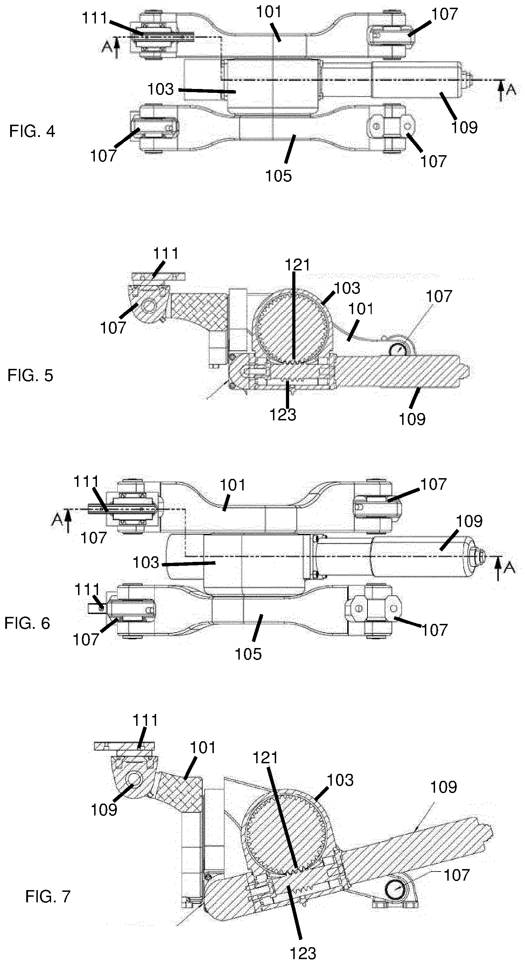

With reference to FIG. 4, a top view of the scissor lift mechanism in the lowered position is illustrated. The ends of the scissor lifting arms 101, 105 can each have an axle going through the ends of the forked ends and the hinges 107. Axles can be placed through the split portions and the hinges, which can provide a substantial amount of physical support for the platform.

FIG. 5 illustrates a cross section front view of the scissor lift mechanism which shows internal components of the rotational actuator 103. The motor 109 is coupled to a worm gear 123 which rotates about a center axis. The worm gear 123 engages a spur gear 121. Rotation of the worm gear 123 causes the spur gear 121 to rotate within the housing of the rotational actuator 103. The center of the front arm 105 can be coupled to the housing of the rotational actuator 103 and the center of the rear arm 101 can be coupled to the spur gear 121. The motor 109 rotates the worm gear 123 which in turn rotates the spur gear 121 to rotate the front arm 105 clockwise relative to the rear arm 101 to a lowered position.

FIG. 6 illustrates a top view of the scissor lift mechanism in the raised position. FIG. 7 illustrates a cross section front view of the scissor lift mechanism in the raised position. The motor 109 has rotated the worm gear 123 which rotates the spur gear 121 which rotates the front arm 105 counter clockwise relative to the rear arm 101 to a raised position.

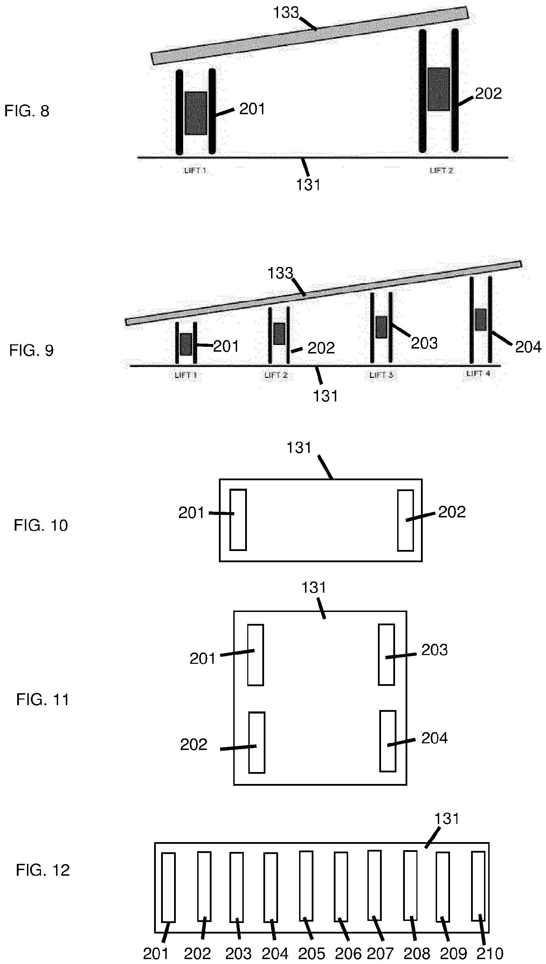

Multiple scissor lift mechanisms described above can be used and independently controlled. When multiple scissor lifts are used with a lift platform, the scissor lifts can be coupled to the lower surface of the lift platform with pivot points having two axes of rotation. The scissor lifts can be individually or cumulatively controlled by a controller. FIG. 8 illustrates a side view of an AGV 131 having a first scissor lift 201 on a left side and a second scissor lift 202 on a right side. In this example, the first scissor lift 201 is in the lowered position and the second scissor lift 202 is in a raised position which results in the platform 133 being at an angle relative to the AGV 131. FIG. 9 illustrates a side view of an AGV 131 having a first scissor lift 201, a second scissor lift 202, a third scissor lift 203, and a forth scissor lift 204. In this example, the first scissor lift 201 is in the lowered position and the fourth scissor lift 204 is in a raised position. The second scissor lift 202 and third scissor lift 203 are in partially lifted positions. The platform 133 is angled and supported by all scissor lifts 201, 202, 203, 204.

With reference to FIGS. 10 - 12, top views of AGVs 131 are illustrated with different combinations of scissor lifts. FIG. 10 illustrates an elongated AGV 131 with a first scissor lift 201 on the left side and a second scissor lift 202 on the right side. In this configuration, the platform height and angle can be adjusted by raising or lowering the left scissor lift 201 and the right scissor lift 202.

FIG. 11 illustrates a square AGV 131 with a first scissor lift 201 on the upper left corner, a second scissor lift 202 on the lower left side, a third scissor lift 203 on the upper right corner, and a forth scissor lift 204 on the lower right corner. In these embodiments, the scissor lifts 201 - 204 can be coupled to the lift platform with rotation pivot points which can allow the platform to rotate about two axes of rotation relative to the scissor lifts. A controller can also be used to manipulate the scissor lifts 201 - 204 so that the platform can be moved to any angular orientation relative to the AGV 131.

In some embodiments, it may be necessary to have many scissor lifts for supporting fragile objects, very heavy objects or objects having complex shapes. With reference to FIG. 12, an AGV 131 having ten scissor lifts 201 - 210 is illustrated. The scissor lifts 201 - 210 can be coupled to a controller which can be used to individually control the scissor lifts 201 - 210. In an embodiment, pressure or force sensors can be used with each of the scissor lifts 201 - 210 to provide force feedback to a controller for supporting a platform and/or object. The controller can control the scissor lifts 201 - 210 to uniformly distribute the support forces provided by each of the scissor lifts 201 - 210. In other embodiments, the scissor lifts 201 - 210 can be individually controlled to provide physical support for objects that have non-planar support surfaces.

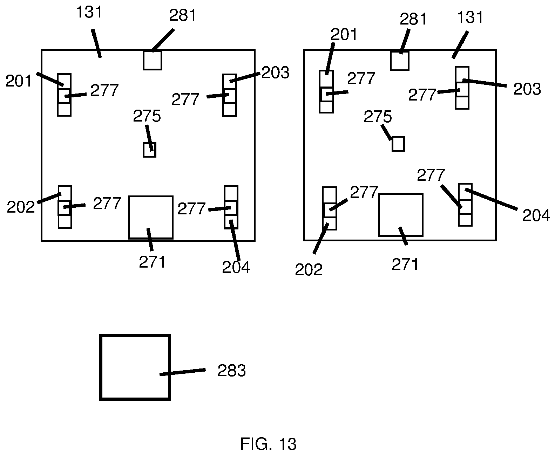

FIG. 13 illustrates two AGVs 131 which each have four scissor lifts 201 - 204 which are controlled by a controller 271. The controller 271 can be coupled to sensors 277 such as position/level/pressure/force sensors and used to control the movements of the scissor lifts. Pressure/force sensors 277 can be placed between the scissor lifts 201 - 204 and the support platform and detect the lift force applied to each scissor lift 201 - 204. The controller 271 can detect the pressure applied to each of the pressure/force sensors 277 and adjust the scissor lifts 201 - 204 so that the loads supported by scissor lifts 201 - 204 are evenly distributed. If a scissor lift is above or below a pressure range, the controller 271 can adjust the scissor lift so that the force is within the required tolerance. For example, if the total weight supported by the AGV is 400 kilogram (KG) the support platform is meant to be level, and the forces applied to each of the scissor lifts are: scissor lift 201 = 110 KG, scissor lift 202 = 110 KG, scissor lift 203 = 110 KG, and scissor lift 204 = 70 KG; the controller 271 can detect that the force sensor 277 on scissor lift 204 is lower than the other force sensors 277 and respond by raising the scissor lift 204 to increase the force on the corresponding force sensor 277. By performing this adjustment, the forces detected by the force sensors 277 should be more balanced and uniform.

A level and position sensor 275 can be coupled to the support surface. The level and position sensor 275 can be used to detect the angular position of the platform and the pressure sensors can be used to detect the pressure between the scissor lifts 201 - 204 and the platform. The scissor lifts 201 - 204 can be actuated by the controller 271 to move the platform to the desired height and the desired angle based upon feedback of the level and position sensor 275 to the controller 271.

In an embodiment, the AGVs 131 can have radio frequency transceivers 281 which allow the AGVs 131 to communicate with each other and/or a central controller 283. The controller 271 can control the movements of the AGVs 131 so that they can move together in a coordinated manner. For example, if a large object is being moved by multiple AGVs 131, the relative positions of the AGVs 131 can be maintained throughout the movement of the object. If a part or structure is being transported by multiple AGVs 131, the system can keep the AGVs 131 in the same relative position to each other so that the part or structure does not shift on the AGVs 131 during movement. The controllers 271 can provide synchronized lifting and lowering of the scissor lifts 201 - 204 between the multiple AGVs 131. The controllers 271 can also coordinate the operations of the scissor lifts 201 - 204 on multiple AGVs 131 so that an evenly distributed lift force can be provided by each of the scissor lifts 201 - 204.

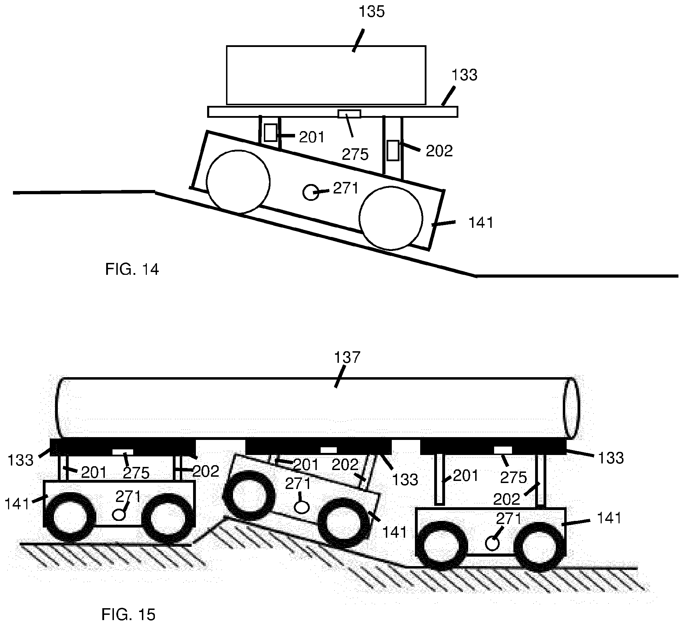

With reference to FIGS. 14 and 15, side views of AGVs 141 with integrated scissor lifts 201, 202 are illustrated. In the illustrated example, the AGVs 141 which can have multiple wheels which are each driven by an electric motor(s). The electric motors can be brushless direct current (BLDC) motors powered by rechargeable batteries and controlled by a motor controller. The motor controllers can include a main controller circuit and electrical power switching mechanisms. The motor controllers can include a general purpose central processing unit (CPU) such as an Arduino controller and general purpose input/output (GPIO) mounted drivers.

With reference to FIG. 14, a side view of an AGV 141 with integrated scissor lifts 201, 202 is illustrated. The AGV 141 has moved over an uneven surface so that the left side of the AGV 141 is higher than the right side. The platform 133 can have a sensor 275 which can detect the angle of the platform 133 and transmit the angle information to the controller 271. The controller 271 can immediately respond to changes in the angle of the platform 133 to keep it level. In this example, the controller 271 has raised the right scissor lift 202 and lowered the left scissor lift 201. As the terrain under the AGV 141 changes the controller 271 will continue to change the heights of the scissor lifts 201, 202.

As discussed, the AGVs 141 can operate independently and may not be coupled to each other. The AGVs 141 can include communication means with wireless networks. For example, the communications mechanism can be a radio frequency (RF) device such as a Wi-Fi mechanism or any other RF communications transceiver system. These controls can be used to alter the separation distance between the AGVs 141 and control the movements of the scissor lifts 201, 202 to angle, raise or lower the platforms 133.

In an embodiment, a system controller can transmit navigational controls to a plurality of AGVs and each AGV can transmit location information back to the system controller for feedback on the locations of the plurality of AGVs. In order to maintain the relative orientations of the AGVs, each AGV can move at different speeds around a turn, one AGV moving through a larger radius of a turn can be moved faster than another AGV moving through a smaller radius of a turn.

With reference to FIG. 15, the object 137 is an elongated cylinder 137 that is supported by three AGVs 141. In order to properly support the elongated cylinder 137, the lift platforms 133 must be both level and coplanar with each other. The controllers 271 can receive the height and angle information from the sensors 275 and adjust the scissor lifts 201, 202 to maintain a predetermined lift platform height and angle as the AGVs 141 travel over uneven terrain. In this example, the right AGV 141 is on a lower surface and the scissor lifts 201, 202 have been fully raised. The center AGV 141 is on an angled surface and the left scissor lift 201 has been lowered and the right scissor lift 202 has been raised. The left AGV 141 is on a flat medium height surface and the scissor lifts 201, 202 have been partially raised. As the AGVs 141 move over the terrain, AGVs 141 can maintain their relative positions, and the controllers 271 can control the scissor lifts 201, 202 to maintain the platforms at the same raised planar positions.

In an embodiment, the AGVs can move a payload placed on the platform to a payload loading/unloading location. The platform can be moved vertically as described above to a desired height and a robot mechanism can load or unload the payload from the platform.

The present disclosure, in various embodiments, includes components, methods, processes, systems, and/or apparatus substantially as depicted and described herein, including various embodiments, sub-combinations, and subsets thereof. Those of skill in the art will understand how to make and use the present disclosure. The present disclosure, in various embodiments, includes providing devices and processes in the absence of items not depicted and/or described herein or in various embodiments hereof, including in the absence of such items as may have been used in previous devices or processes, e.g., for improving performance, achieving ease, and/or reducing cost of implementation. Rather, as the following claims reflect, inventive aspects lie in less than all features of any single foregoing disclosed embodiment.

## Claims

1. A payload lift system comprising:
a first automated guided vehicle (AGV) having a plurality of movable support structures;
a first scissor lift coupled to a first portion of the first AGV, the first scissor lift having a first pair of arms and a first rotational actuator between center portions of the first pair of arms which rotates in a first rotational direction to raise the first scissor lift and a second rotational direction which is opposite the first rotational direction to lower the first scissor lift;
a second scissor lift coupled to a second portion of the first AGV, the second scissor lift having a second pair of arms and a second rotational actuator between center portions of the second pair of arms which rotates in the first rotational direction to raise the second scissor lift and the second rotational direction to lower the second scissor lift;
a first lift platform coupled to the first scissor lift and the second scissor lift;
a sensor coupled to the first lift platform for determining an angle of the first lift platform;
a controller which receives platform angle data from the sensor and controls the movements of the first rotational actuator and the second rotational actuator, wherein the controller adjusts the first rotational actuator and the second rotational actuator to control the angle and height of the first lift platform.

2. The payload lift system of claim 1 further comprising:
a third scissor lift coupled to a third portion of the first AGV, the third scissor lift having a third pair of arms and a third rotational actuator between center portions of the third pair of arms which rotates in the first rotational direction to raise the third scissor lift and the second rotational direction to lower the third scissor lift;
wherein the controller is coupled to the third rotational actuator.

3. The payload lift system of claim 2 wherein the controller adjusts the first scissor lift, the second scissor lift and the third scissor lift to maintain the first lift platform at a predetermined angle while the first AGV moves.

4. The payload lift system of claim 2 or 3 wherein the first scissor lift is adjacent to a first corner of the first lift platform and the second scissor lift is adjacent to a second corner of the first lift platform.

5. The payload lift system of claim 2 or 3 wherein the second scissor lift is between the first scissor lift and the third scissor lift under the first lift platform.

6. The payload lift system of claim 2 further comprising:
a fourth scissor lift coupled to a fourth portion of the AGV, the fourth scissor lift having a fourth pair of arms and a fourth rotational actuator between center portions of the fourth pair of arms which rotates in the first rotational direction to raise the fourth scissor lift and the second rotational direction to lower the fourth scissor lift;
wherein the controller is coupled to the fourth rotational actuator.

7. The payload lift system of claim 6 wherein the first scissor lift is adjacent to a first corner of the first lift platform, the second scissor lift is adjacent to a second corner of the first lift platform, the third scissor lift is adjacent to a third corner of the first lift platform, and the fourth scissor lift is adjacent to a fourth corner of the first lift platform.

8. The payload lift system of claim 6 wherein the second scissor lift and the third scissor lift are between the first scissor lift and the fourth scissor lift under the first lift platform.

9. The payload lift system of claim 1 wherein the first scissor lift and the second scissor lift are each coupled to horizontal slides.

10. The payload lift system of claim 1 wherein the first scissor lift and the second scissor lift are each coupled to rotation pivot points.

11. The payload lift system of any preceding claim, further comprising:
a second automated guided vehicle (AGV) having a plurality of scissor lifts coupled to a second lift platform;
a second sensor coupled to the second lift platform for determining an angle of the second lift platform;
a second controller which receives angle data from the second sensor and controls the movements of the plurality of scissor lifts and communicates with the first controller, wherein the second controller adjusts the scissor lifts so that the second lift platform is parallel with the first lift platform.

12. The payload lift system of any of claims 1-10 further comprising:
a second automated guided vehicle (AGV) having a plurality of scissor lifts coupled to a second lift platform;
a second sensor coupled to the second lift platform for determining the angle of the second lift platform;
a second controller which receives angle data from the second sensor and controls the movements of the plurality of scissor lifts and communicates with the first controller, wherein the second controller adjusts the scissor lifts so that the second lift platform is coplanar with the first lift platform.

13. The payload lift system of any of claims 1-10 further comprising:
a second automated guided vehicle (AGV) having a plurality of scissor lifts coupled to a second lift platform;
a second sensor coupled to the second lift platform for determining the angle of the second lift platform;
a second controller which receives angle data from the second sensor and controls the movements of the plurality of scissor lifts and communicates with the first controller, wherein the second controller controls the second AGV to follow movements of the first AGV.

14. The payload lift system of any of claims 1-10 further comprising:
a second automated guided vehicle (AGV) having a plurality of scissor lifts coupled to a second lift platform;
a second sensor coupled to the second lift platform for determining the angle of the second lift platform;
a second controller which communicates with the first controller receives angle data from the second sensor and controls the movements of the plurality of scissor lifts and moves the second lift platform in synchronization with movements of the first lift platform.

15. The payload lift system of any preceding claim wherein the first rotational actuator and the second rotational actuator each include a ring gear which is driven by a worm gear.
